# EUROPEAN PATENT APPLICATION

(11) **EP 4 818 667 A1**
(43) Date of publication of application: **07.10.2026**
(21) Application number: 24897276.2
(22) Date of filing: 12.11.2024
(51) Int. Cl.: G01M 3/20, G01N 21/64, G01N 21/91

(54) **FLUORESCENCE INSPECTION LIQUID**

(30) Priority: 30.11.2023 WO PCT/JP2023/042894
(71) Applicant: SMC Corporation, Tokyo 104-0031 (JP)
(72) Inventor: KAWAMURA, Youichi, Chiba 277-0871 (JP); OKUHIRA, Hiroyuki, Chiba 277-0871 (JP); YOSHIDA, Yasunori, Chiba 277-0871 (JP)
(74) Representative: Keil & Schaafhausen Patentanwälte PartGmbB
(86) International application number: PCT/JP2024/040096
(87) International publication number: WO 2025/115589

(57) **Abstract**

This fluorescence inspection liquid contains: water; riboflavin or rhodamine (B) as a fluorescent dye dissolved in the water; and a degradation inhibitor for preventing degradation due to light from the fluorescent dye. The degradation inhibitor contains a paraoxybenzoic acid ester.

## Description

### TECHNICAL FIELD

The present invention relates to a fluorescent (fluorescence) inspection liquid used for a leak inspection.

### BACKGROUND ART

In some cases, a leak inspection is performed on equipment required to have a certain degree of airtightness or a piping facility. As one method of the leak inspection, there is an inspection method using an inspection liquid containing a fluorescent dye (hereinafter referred to as a fluorescent inspection liquid).

For example, JP 2018-132305 A discloses a system for supplying a mist containing a fluorescent inspection liquid into a working chamber for pharmaceutical products to perform a leak inspection of the working chamber. The above-described document also describes the use of a solution of riboflavin or riboflavin sodium phosphate as the fluorescent inspection liquid.

Further, it is also known to use an aqueous solution of rhodamine B as a fluorescent inspection liquid used for a leak inspection (for example, JP 2000-107575 A).

### SUMMARY OF THE INVENTION

An aqueous solution of a fluorescent dye such as riboflavin or rhodamine B may gradually deteriorate due to exposure to indoor light even during storage. Therefore, there is a problem that long-term storage is difficult, and that complicated preparation work is required because it is necessary to prepare a fluorescent inspection liquid by dissolving a powder of riboflavin or rhodamine B in water immediately before use.

In addition, in facilities where an inspection using a fluorescent inspection liquid is periodically performed, it is necessary to wipe off the fluorescent inspection liquid leaked from the leakage area before the next inspection. However, in facilities such as piping facilities in factories and air conditioning facilities in buildings, the work of cleaning the fluorescent inspection liquid may be difficult depending on the leakage area.

Therefore, there is a demand for a fluorescent inspection liquid that, while having increased stability against indoor light, can eliminate the need for cleaning work by being decomposed and losing fluorescence over an appropriate period of time after inspection.

The present invention has the object of solving the aforementioned problem.

An aspect of the following disclosure is characterized by a fluorescent inspection liquid containing: water; a fluorescent dye dissolved in the water; and a deterioration inhibitor configured to prevent deterioration of the fluorescent dye due to light, wherein the deterioration inhibitor is a parahydroxybenzoate ester.

According to the fluorescent inspection liquid of the above aspect, the stability of the fluorescent dye as an aqueous solution against light is enhanced and the photo-deterioration rate is suppressed during storage. In addition, after the fluorescent inspection liquid is released into the environment, the fluorescent dye is decomposed and the fluorescence disappears within several hours to several weeks, making it possible to eliminate the need for cleaning work after the leak inspection. Therefore, the fluorescent inspection liquid of the above aspect can eliminate the need for the work of preparing the fluorescent inspection liquid immediately before the leak inspection and the cleaning work after the leak inspection, making it possible to achieve labor saving in the leak inspection.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF DRAWINGS

[FIG. 1] FIG. 1 is a table showing composition examples of a first fluorescent inspection liquid to a sixth fluorescent inspection liquid according to Experimental Example 1, fluorescent colors, and evaluation results of sewage discharge standards;
[FIG. 2] FIG. 2A is a photograph taken by irradiating a leakage area with ultraviolet light during a leak inspection, and FIG. 2B is a photograph taken by irradiating the leakage area with ultraviolet light one week after the photograph of FIG. 2A is taken;
[FIG. 3] FIG. 3A is a photograph showing a change in appearance of a riboflavin aqueous solution (concentration: 20 ppm) when irradiated with a fluorescent lamp (Experimental Example 2), and
FIG. 3B is a photograph showing a change in appearance of a riboflavin aqueous solution (concentration: 20 ppm) when irradiated with an ultraviolet lamp (Experimental Example 3);
[FIG. 4] FIG. 4 is a photograph showing a change in appearance of riboflavin aqueous solutions (concentrations: 5 to 20 ppm) to which methyl parahydroxybenzoate was added in a concentration range of 0 to 100 ppm, when irradiated with an ultraviolet lamp (Experimental Example 4);
[FIG. 5] FIG. 5A is a graph showing a change in the fluorescence brightness of the riboflavin aqueous solution having a concentration of 5 ppm shown in FIG. 4 with respect to an irradiation time, and FIG. 5B is a graph showing a change in the fluorescence brightness of the riboflavin aqueous solution having a concentration of 10 ppm shown in FIG. 4 with respect to the irradiation time;
[FIG. 6] FIG. 6 is a graph showing a change in the fluorescence brightness of the riboflavin aqueous solution having a concentration of 20 ppm shown in FIG. 4 with respect to the irradiation time;
[FIG. 7] FIG. 7 is a photograph showing a change in appearance of rhodamine B aqueous solutions (concentrations: 1 to 5 ppm) to which methyl parahydroxybenzoate was added in a concentration range of 0 to 100 ppm, when irradiated with an ultraviolet lamp (Experimental Example 5);
[FIG. 8] FIG. 8A is a graph showing a change in the fluorescence brightness of the rhodamine B aqueous solution having a concentration of 1 ppm shown in FIG. 7 with respect to an irradiation time, and FIG. 8B is a graph showing a change in the fluorescence brightness of the rhodamine B aqueous solution having a concentration of 3 ppm shown in FIG. 7 with respect to the irradiation time; and
[FIG. 9] FIG. 9 is a graph showing a change in the fluorescence brightness of the rhodamine B aqueous solution having a concentration of 5 ppm shown in FIG. 7 with respect to the irradiation time.

### DETAILED DESCRIPTION OF THE INVENTION

The fluorescent inspection liquid according to the present embodiment is used for, for example, a leak inspection of a piping system in a factory. The fluorescent inspection liquid is, for example, sprayed in a mist form into compressed air and introduced into the piping system together with the compressed air. The fluorescent inspection liquid in the mist form is carried by the flow of the compressed air and reaches the respective portions of the piping. For example, when a looseness occurs in a portion such as a joint of a pipe, compressed air leaks from the portion. The fluorescent inspection liquid flows out to the outside from a leakage area such as the joint of the pipe together with the leaking compressed air, and stains the leakage area with the fluorescent dye. The leakage area stained with the fluorescent inspection liquid can be easily detected visually by irradiating the leakage area with ultraviolet light with a black light or the like.

Note that the above example does not limit the application of the fluorescent inspection liquid to the piping system. The fluorescent inspection liquid can also be used for a leak inspection of a facility or the like required to have a sealing property, such as water piping, a food manufacturing facility, or building air-conditioning piping. Further, in addition to being added in a mist form to the high-pressure air, the fluorescent inspection liquid may be introduced into a pipe or the like as a liquid diluted at a predetermined ratio.

The fluorescent inspection liquid of the present embodiment is an aqueous solution in which a fluorescent dye and a deterioration inhibitor are dissolved in water serving as a solvent. The fluorescent dye is made of a substance that is easily decomposed by microorganisms, by reaction with oxygen in the atmosphere, or by visible light or ultraviolet light in the environment, and is highly safe for the human body. As the fluorescent dye, for example, a food dye or a substance contained in food is selected depending on the application. In addition, as the fluorescent dye, a substance having a low irritation to the skin is selected depending on the application. As the fluorescent dye, a blue fluorescent dye, a green fluorescent dye, and a red fluorescent dye may be used.

The blue fluorescent dye is a dye that absorbs ultraviolet light and emits blue fluorescence in the wavelength range from 360 to 500 nm. Examples of the blue fluorescent dye used in the fluorescent inspection liquid of the present embodiment include a flavin derivative described later, quinine, pyrene, anthocyanin, and umbelliferone. These blue fluorescent dyes may be used alone or in combination of two or more.

Among blue fluorescent dyes, a mixture of quinine and a flavin derivative is suitable because it is excellent in safety to the human body and emits vivid blue fluorescence with high visibility. Quinine is used as a bittering agent for soft drinks (tonic water) and the like, and is highly safe for the human body even when orally ingested, and is also excellent in biodegradability and degradability (decomposition property) in the atmosphere. Further, the flavin derivative of the present embodiment is a derivative having a flavin skeleton and prepared using riboflavin as a starting material. Such a flavin derivative is, for example, a fluorescent dye obtained by subjecting riboflavin to photodecomposition, and contains formylmethylflavin and lumichrome as main components. These substances are produced by photodecomposition of riboflavin (vitamin B2), are contained in foods, are safe even when orally ingested, and are rapidly decomposed in the environment.

The green fluorescent dye is a dye that absorbs ultraviolet light and emits green fluorescence in the wavelength range from 500 to 570 nm. Examples of the green fluorescent dye include riboflavin (vitamin B2), fluoresceine, acridine orange, phloxine B (Red No. 104), and lycopene. These green fluorescent dyes may be used alone or in combination of two or more. Among these, riboflavin is suitable for the fluorescent inspection liquid of the present embodiment because it is contained in foods as vitamin B2, is highly safe for the human body, and is excellent in biodegradability and degradability in the atmosphere. In the present embodiment, the fluorescent inspection liquid containing riboflavin as the green fluorescent dye preferably contains riboflavin at a concentration of 5 to 27 ppm. In a preferred example, the fluorescent inspection liquid may contain riboflavin as the green fluorescent dye at a concentration of 5 to 20 ppm.

The red fluorescent dye is a dye that absorbs ultraviolet light and emits red fluorescence in the wavelength range from 590 to 830 nm. Examples of the red fluorescent dye include chlorophyll, rhodamine B, acid red (Red No. 106), eosin, cochineal dye, tannin, phycocyanin (spirulina dye), carthamin (safflower dye), phycoerythrin, erythrosine (Red No. 3), and rose bengal (Red No. 105). These red fluorescent dyes may be used alone or in combination of two or more. In the present embodiment, the fluorescent inspection liquid containing rhodamine B as the red fluorescent dye preferably contains rhodamine B at a concentration of 1 to 123 ppm. In a preferred example, the fluorescent inspection liquid may contain rhodamine B as the red fluorescent dye at a concentration of 1 to 5 ppm.

Note that the fluorescent inspection liquid may be prepared so as to emit blue-green fluorescence by containing a blue fluorescent dye and a green fluorescent dye. Further, the fluorescent inspection liquid may be prepared so as to emit orange or yellow fluorescence by combining a green fluorescent dye and a red fluorescent dye. Further, the fluorescent inspection liquid may be prepared so as to emit pink or purple fluorescence by combining a blue fluorescent dye and a red fluorescent dye. For the fluorescent inspection liquid of the present embodiment, a fluorescent color having the best visibility under the inspection environment can be appropriately selected.

The deterioration inhibitor suppresses deterioration and alteration of a fluorescent dye, which is contained as an aqueous solution in the fluorescent inspection liquid, due to light. As the deterioration inhibitor, parahydroxybenzoate ester may be used. Note that the deterioration inhibitor may have a preservative (antiseptic) function of preventing the fluorescent dye as an aqueous solution from being decomposed by microorganisms. In order to enhance such a preservative function, an isothiazolinone derivative may be added in addition to parahydroxybenzoate ester.

In one embodiment, parahydroxybenzoate ester may be used as the deterioration inhibitor. Examples of the parahydroxybenzoate ester that can be used in the fluorescent inspection liquid include methyl parahydroxybenzoate (methylparaben), ethyl parahydroxybenzoate (ethylparaben), propyl parahydroxybenzoate (propylparaben), isopropyl parahydroxybenzoate (isopropylparaben), butyl parahydroxybenzoate (butylparaben), isobutyl parahydroxybenzoate (isobutylparaben), heptyl parahydroxybenzoate (heptylparaben), and benzyl parahydroxybenzoate (benzylparaben). As the deterioration inhibitor, one of the parahydroxybenzoate esters listed above or a combination thereof may be used.

Further, in another embodiment, an isothiazolinone derivative may be further added to enhance the preservative function. As the isothiazolinone derivative, any one of methylisothiazolinone (MI), methylchloroisothiazolinone (MCI), octylisothiazolinone (OI), dichlorooctylisothiazolinone (DOCI), and benzisothiazolinone (BI), or a combination thereof may be used.

In the fluorescent inspection liquid, the deterioration inhibitor can be used in a concentration range of 10 ppm or less or a concentration range of 100 ppm or less depending on the application. Methylparaben in a concentration range of 10 ppm of less satisfies the standard acceptable as a food additive and is highly safe when orally ingested, and therefore is suitable for, for example, a fluorescent inspection liquid for food processing equipment. In addition, the deterioration inhibitor having a concentration of 100 ppm or less satisfies the standards acceptable for medicines and medical equipment, does not irritate the skin even when coming into contact with the skin, and can realize a highly safe fluorescent inspection liquid. Further, if the concentration of the deterioration inhibitor is equal to or lower than 100 ppm, rapid decomposition of the fluorescent dye by light in the environment after use is not prevented. Therefore, the fluorescent inspection liquid of the present embodiment is suitable for labor saving in cleaning work after the leak inspection.

### (Experimental Example 1)

In this experimental example, evaluation of sewage discharge standards and evaluation of disappearance of fluorescence were performed for composition examples of fluorescent inspection liquids.

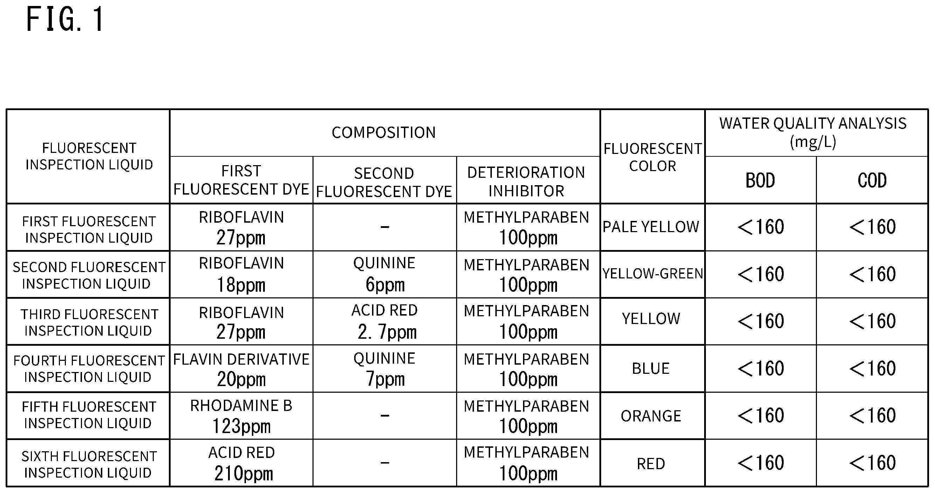

FIG. 1 is a table showing composition examples of a first fluorescent inspection liquid to a sixth fluorescent inspection liquid according to this experimental example, fluorescent colors, and evaluation results of sewage discharge standards. The first fluorescent inspection liquid is an aqueous solution containing 27 ppm of riboflavin (vitamin B2) as a first fluorescent dye. The first fluorescent inspection liquid contains 100 ppm of methylparaben as a deterioration inhibitor. The first fluorescent inspection liquid emits slightly greenish pale yellow fluorescence. The first fluorescent inspection liquid had a COD (chemical oxygen demand) and a BOD (biochemical oxygen demand), which indicate the degree of contamination of water quality, below the standard value of 160 mg/L at which the fluorescent inspection liquid can be discharged as wastewater. Therefore, it was confirmed that the first fluorescent inspection liquid could be discharged into the sewer.

The second fluorescent inspection liquid is an aqueous solution containing 18 ppm of riboflavin as the first fluorescent dye, 6 ppm of quinine, which is a blue fluorescent dye, as a second fluorescent dye, and 100 ppm of methylparaben as the deterioration inhibitor. The second fluorescent inspection liquid emits yellow-green fluorescence. It was confirmed that the second fluorescent inspection liquid had both the COD and the BOD below 160 mg/L and could be discharged into the sewer.

The third fluorescent inspection liquid is an aqueous solution containing 27 ppm of riboflavin as the first fluorescent dye, and 2.7 ppm of acid red, which is a red fluorescent dye, as the second fluorescent dye. The third fluorescent inspection liquid contains 100 ppm methylparaben as the deterioration inhibitor. The third fluorescent inspection liquid emits slightly reddish yellow fluorescence. It was confirmed that the third fluorescent inspection liquid had both the COD and the BOD below 160 mg/L and could be discharged into the sewer.

The fourth fluorescent inspection liquid is an aqueous solution containing 20 ppm of a flavin derivative, which is a blue fluorescent dye, as the first fluorescent dye, 7 ppm of quinine, which is a blue fluorescent dye, as the second fluorescent dye, and 100 ppm of methylparaben as the deterioration inhibitor. The fourth fluorescent inspection liquid emits blue fluorescence. It was confirmed that the fourth fluorescent inspection liquid had both the COD and the BOD below 160 mg/L and could be discharged into the sewer.

The fifth fluorescent inspection liquid contains 123 ppm of rhodamine B, which is a red fluorescent dye, as the first fluorescent dye, and contains 100 ppm of methylparaben as the deterioration inhibitor. The fifth fluorescent inspection liquid emits orange (yellowish red) fluorescence. It was confirmed that the fifth fluorescent inspection liquid had both the COD and the BOD below 160 mg/L and could be discharged into the sewer.

The sixth fluorescent inspection liquid contains 210 ppm of acid red, which is a red fluorescent dye, as the first fluorescent dye, and contains 100 ppm of methylparaben as the deterioration inhibitor. The sixth fluorescent inspection liquid emits red fluorescence. It was confirmed that the sixth fluorescent inspection liquid had both the COD and the BOD below 160 mg/L and could be discharged into the sewer.

Next, the results of examining the degradability of the fluorescent dyes in the atmosphere will be described. A fluorescent inspection liquid in a mist form was supplied together with compressed air to a test pipe in which a looseness that could be a leakage area was provided in a joint of the pipe. In this experimental example, a fluorescent inspection liquid containing riboflavin as a fluorescent dye at a concentration of 5 ppm and methyl parahydroxybenzoate as a deterioration inhibitor at a concentration of 10 ppm was used.

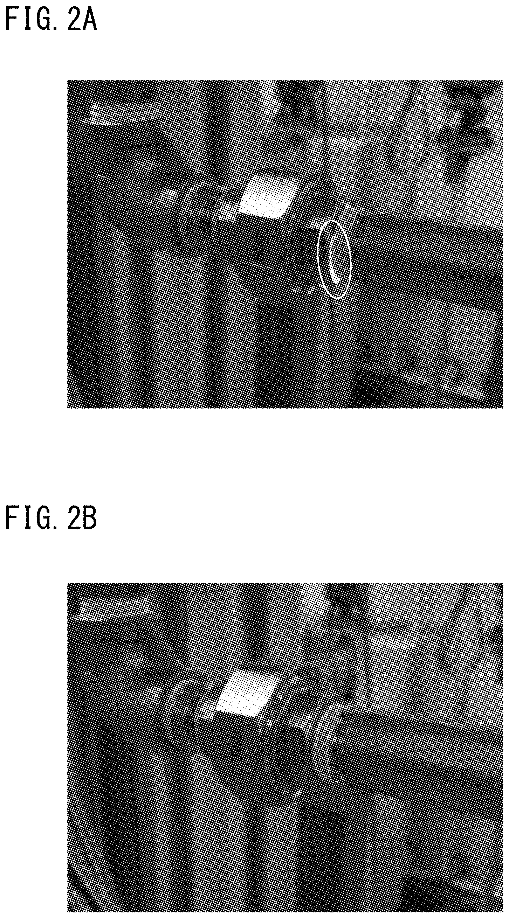

In the portion indicated by the white oval outline in FIG. 2A, the fluorescent inspection liquid leaks from the joint of the pipe. The leakage area is irradiated with ultraviolet light from a black light. As shown in the figure, bright fluorescence was emitted from the leaked fluorescent inspection liquid, and the leakage area could be easily confirmed visually.

Next, the pipe and the joint in FIG. 2A were left for one week without cleaning the fluorescent inspection liquid, and then the same area was irradiated with ultraviolet light to confirm the presence or absence of fluorescence. The results are shown in FIG. 2B. As shown in FIG. 2B, the fluorescence of the fluorescent inspection liquid disappeared at the joint, and the fluorescent dye (riboflavin) was rapidly decomposed. In this manner, it was confirmed that the fluorescent dye in the fluorescent inspection liquid of the present embodiment was decomposed in a short time of one week or less.

### (Experimental Example 2)

In this experimental example, the photo-deterioration rate of an aqueous solution containing riboflavin as a fluorescent dye at a concentration of 20 ppm was evaluated. The irradiation by a fluorescent lamp in this experimental example was performed at an illuminance of 750 lx (lux). The light at this illuminance corresponds to the illuminance required for normal visual working environments in factories, offices, and the like, which is defined by the JIS Z 9110 (General rules of recommended lighting levels), and corresponds to the illuminance of normal indoor light. The light irradiation was performed for 0 to 1200 minutes. In this experimental example, every time a predetermined time elapsed, the aqueous solution was irradiated with ultraviolet light, and fluorescence emitted from the aqueous solution was photographed with a camera.

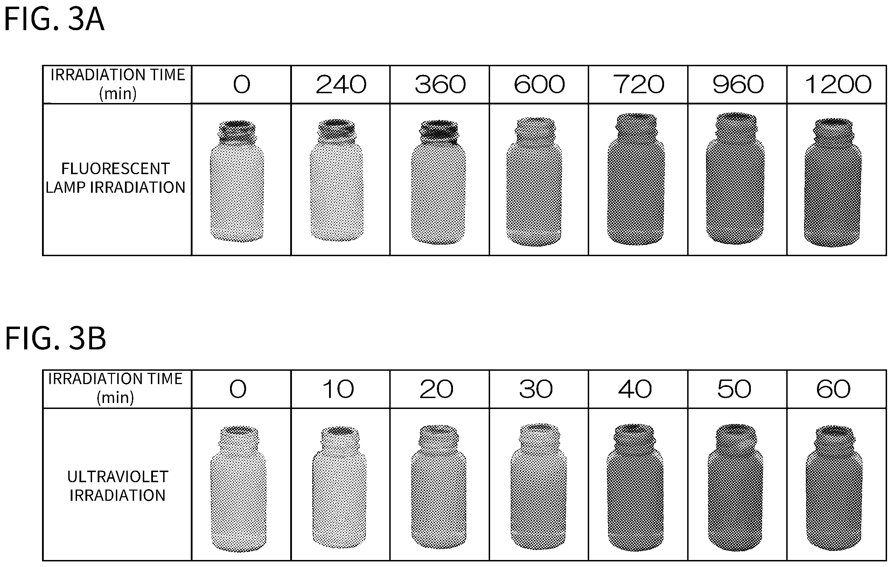

FIG. 3A shows a change in appearance of the riboflavin aqueous solution according to Experimental Example 2. When the riboflavin aqueous solution was continuously irradiated with light from the fluorescent lamp, the fluorescence of the aqueous solution gradually changed from bright greenish yellow to blue. Therefore, it was confirmed that the riboflavin aqueous solution containing no deterioration inhibitor was deteriorated in a relatively short time.

### (Experimental Example 3)

In this experimental example, an accelerating test of the photo-deterioration rate was attempted. In this experimental example, an aqueous solution containing riboflavin at a concentration of 20 ppm was used in the same manner as in Experimental Example 2. In this experimental example, light irradiation with an ultraviolet lamp instead of a fluorescent lamp was performed. Irradiation with ultraviolet light was performed at an intensity of 10.0 mW/cm². In this experimental example, every time a predetermined time elapsed, the fluorescence emitted from the aqueous solution was photographed.

FIG. 3B shows a change in appearance of the riboflavin aqueous solution according to Experimental Example 3. According to this experimental example, it was confirmed that the irradiation of the riboflavin aqueous solution with ultraviolet light for 60 minutes brought about a change in the fluorescent color equivalent to that of the irradiation with light from the fluorescent lamp for 1200 minutes in Experimental Example 2. Therefore, the irradiation with the ultraviolet lamp resulted in the acceleration of the photo-deterioration rate by about 20 times as compared with the light irradiation with the fluorescent lamp.

### (Experimental Example 4)

In this experimental example, a fluorescent inspection liquid was prepared by adding methyl parahydroxybenzoate (methylparaben), which is one of parahydroxybenzoate esters, as the deterioration inhibitor to each of riboflavin aqueous solutions (concentrations: 5 ppm, 10 ppm, and 20 ppm). The amounts of methyl parahydroxybenzoate added was 0 ppm, 50 ppm, and 100 ppm, and a total of nine types of fluorescent inspection liquids were prepared.

The photo-deterioration rate was evaluated by irradiating these fluorescent inspection liquids with an ultraviolet lamp. The intensity of ultraviolet light from the ultraviolet lamp was 10.0 mW/cm². In this experimental example as well, the fluorescence of the fluorescent inspection liquid was photographed with the camera at predetermined time intervals.

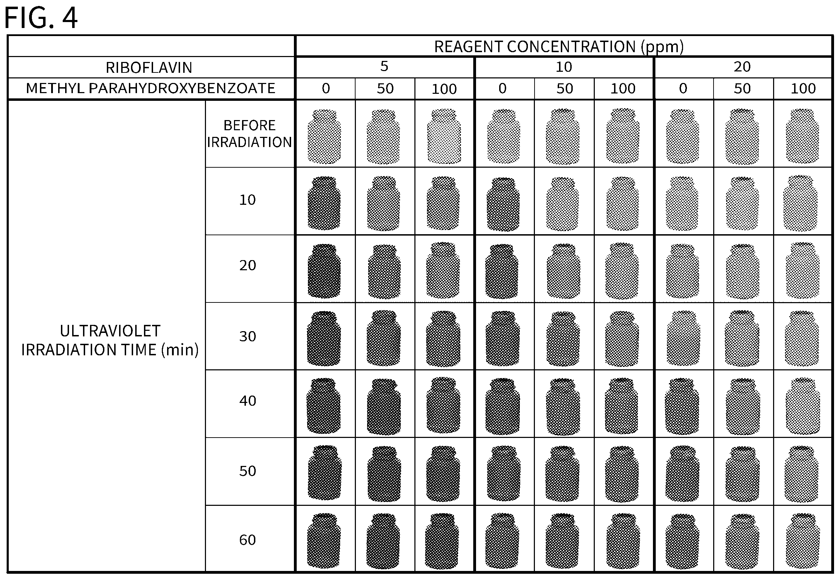

FIG. 4 shows a change in appearance of the fluorescent inspection liquids according to this experimental example. As shown in the figure, no change was observed in the fluorescent color in the initial state when the amount of methyl parahydroxybenzoate added was in the range up to 100 ppm. Therefore, it was confirmed that the addition of methyl parahydroxybenzoate did not affect the fluorescent color of the riboflavin aqueous solution.

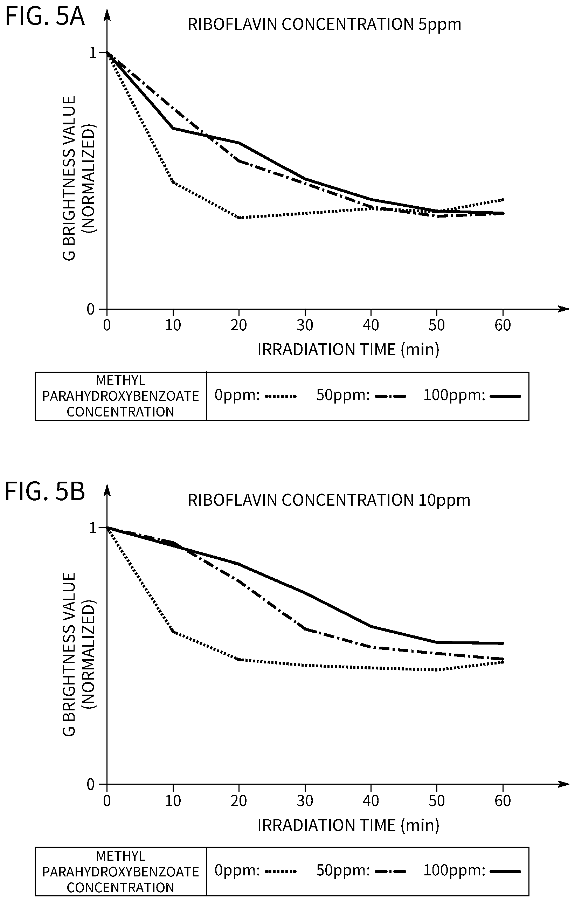

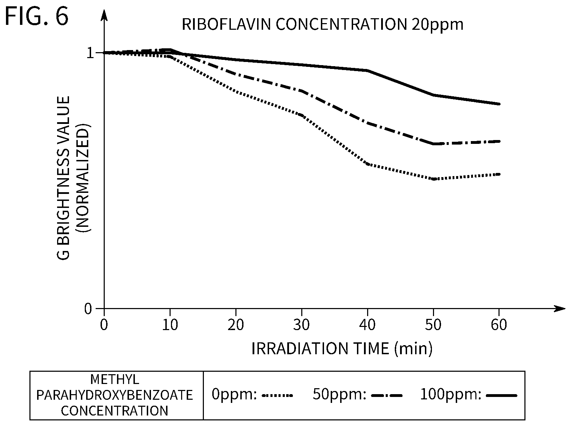

Next, based on the image of FIG. 4, a G brightness value corresponding to green fluorescence of each fluorescent inspection liquid was obtained. The G brightness value was obtained by extracting the brightness values of G from the brightness values of R, G, and B of the pixels of the bottle portions of the image and averaging the extracted brightness values. The G brightness value of each fluorescent inspection liquid is normalized so that the G brightness value at the time of starting irradiation is 1. A change in the G brightness value with respect to the irradiation time is shown in FIGS. 5A to 6.

As shown in FIGS. 5A to 6, there was a tendency that the decrease in the G brightness value corresponding to the green fluorescence was suppressed by adding methyl parahydroxybenzoate regardless of the concentration of riboflavin. Further, the fluorescent inspection liquid containing methyl parahydroxybenzoate at a concentration of 100 ppm was more effective in suppressing the decrease in the G brightness value than the fluorescent inspection liquid containing methyl parahydroxybenzoate at a concentration of 50 ppm. From this result, it was confirmed that methyl parahydroxybenzoate was effective in suppressing the photo-deterioration of the riboflavin aqueous solution (fluorescent inspection liquid).

In addition, even in the fluorescent inspection liquid containing methyl parahydroxybenzoate at a concentration of 100 ppm, the G brightness value decreased when irradiated with light for a sufficient time. From this result, it was confirmed that even in the case where methyl parahydroxybenzoate was added to the riboflavin aqueous solution, the fluorescent inspection liquid was decomposed by being left in an environment where light was applied for a sufficient time after the leak inspection. Therefore, in this experimental example, it was confirmed that the addition of methyl parahydroxybenzoate to the fluorescent inspection liquid did not prevent the decomposition of the fluorescent dye due to being left after the leak inspection, and the labor saving in cleaning work was possible.

### (Experimental Example 5)

In this experimental example, a fluorescent inspection liquid was prepared by adding methyl parahydroxybenzoate (methylparaben) as the deterioration inhibitor to each of rhodamine B aqueous solutions (concentrations: 1 ppm, 3 ppm, and 5 ppm). The amounts of methyl parahydroxybenzoate added was 0 ppm, 50 ppm, and 100 ppm, and a total of nine types of fluorescent inspection liquids were prepared.

The photo-deterioration rate was evaluated by irradiating these fluorescent inspection liquids with an ultraviolet lamp. The intensity of ultraviolet light from the ultraviolet lamp was 10.0 mW/cm². In this experimental example as well, the fluorescence of the fluorescent inspection liquid was photographed with the camera at predetermined time intervals.

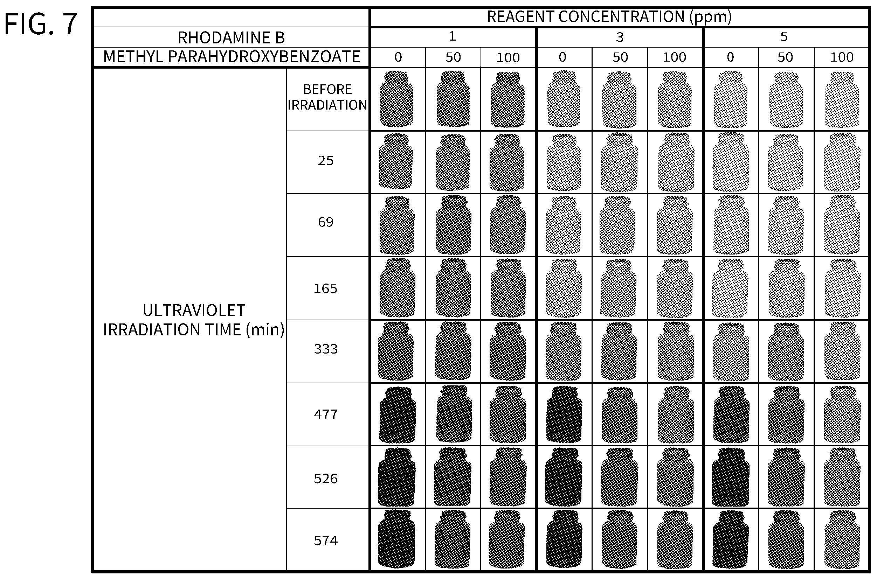

FIG. 7 shows a change in appearance of the fluorescent inspection liquids according to this experimental example. As shown in the figure, no change was observed in the fluorescent color in the initial state when the amount of methyl parahydroxybenzoate added was in the range up to 100 ppm. Therefore, it was confirmed that the addition of methyl parahydroxybenzoate did not affect the orange fluorescent color of the rhodamine B aqueous solution.

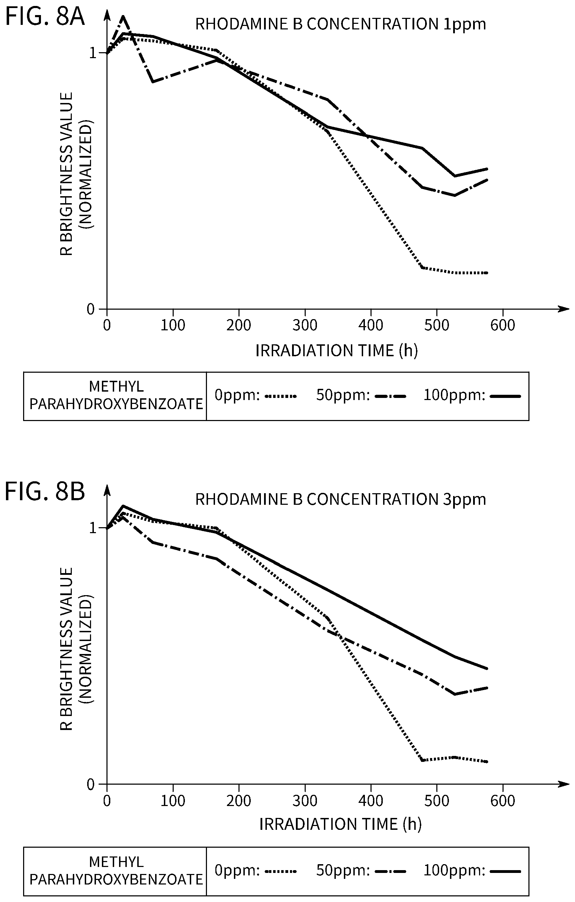

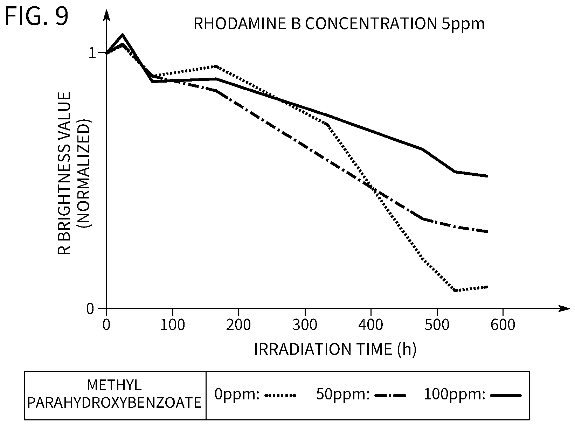

Next, based on the image of FIG. 7, a R brightness value of red fluorescence most reflecting the characteristic fluorescent color was obtained for each fluorescent inspection liquid. The R brightness value was obtained by extracting the brightness values of R from the brightness values of R, G, and B of the pixels of the bottle portions of the image and averaging the extracted brightness values. The R brightness value was normalized so that the R brightness value at the time of starting irradiation was 1. Changes in these R brightness values with respect to the irradiation time are shown in FIGS. 8A to 9.

As shown in FIGS. 8A to 9, a result was obtained that the decrease in the R brightness value was suppressed by adding methyl parahydroxybenzoate regardless of the concentration of rhodamine B. Further, the effect of suppressing the decrease in the R brightness value was larger in the fluorescent inspection liquid containing methyl parahydroxybenzoate at a concentration of 100 ppm than in the fluorescent inspection liquid containing methyl parahydroxybenzoate at a concentration of 50 ppm. From this result, it was confirmed that methyl parahydroxybenzoate was effective in suppressing the photo-deterioration of the rhodamine B aqueous solution (fluorescent inspection liquid).

It was also confirmed that even in the fluorescent inspection liquid containing methyl parahydroxybenzoate at a concentration of 100 ppm, the R brightness value decreased and fluorescence was lost when irradiated with light for a sufficient time. From this result, it was confirmed that even in the case where methyl parahydroxybenzoate was added to the rhodamine B aqueous solution, the fluorescent dye was decomposed by being left in an environment where light was applied for a sufficient time after the leak inspection. Therefore, in this experimental example as well, it was confirmed that the addition of methyl parahydroxybenzoate to the fluorescent inspection liquid did not prevent the decomposition of the fluorescent dye due to being left after the leak inspection, and the labor saving in cleaning work was possible.

The following supplementary notes are further disclosed in relation to the above-described disclosure.

### (Supplementary Note 1)

An aspect of the disclosure described above is characterized by the fluorescent inspection liquid containing: water; the fluorescent dye dissolved in the water; and the deterioration inhibitor configured to prevent deterioration of the fluorescent dye due to light, wherein the deterioration inhibitor is a parahydroxybenzoate ester. The above fluorescent inspection liquid can prevent deterioration of the fluorescent dye due to ultraviolet light during storage.

### (Supplementary Note 2)

The fluorescent inspection liquid according to Supplementary Note 1 may contain methyl parahydroxybenzoate as the deterioration inhibitor at a concentration equal to or higher than 50 ppm. This fluorescent inspection liquid can prevent the deterioration of the fluorescent dye due to ultraviolet light during storage, and after the fluorescent inspection liquid is released into the environment, the fluorescent dye is decomposed in several hours to several days and the fluorescence disappears. Accordingly, the fluorescent inspection liquid of the above aspect can simplify the work of preparing the fluorescent inspection liquid before the leak inspection and the cleaning work after the leak inspection, making it possible to achieve labor saving in the leak inspection.

### (Supplementary Note 3)

The fluorescent inspection liquid according to Supplementary Note 2 may contain methyl parahydroxybenzoate as the deterioration inhibitor at a concentration equal to or lower than 100 ppm. Since this fluorescent inspection liquid satisfies the BOD discharge standard and the COD discharge standard, the fluorescent inspection liquid after use can be discharged into the sewer to be treated.

### (Supplementary Note 4)

The fluorescent inspection liquid according to any one of Supplementary Notes 1 to 3 may contain riboflavin as the fluorescent dye at a concentration of 5 to 27 ppm. This fluorescent inspection liquid is excellent in safety to the human body and can prevent deterioration due to ultraviolet light during storage. Further, since this fluorescent inspection liquid is decomposed by sufficient light irradiation, cleaning work after use can be omitted, which is preferable.

### (Supplementary Note 5)

The fluorescent inspection liquid according to any one of Supplementary Notes 1 to 3 may contain rhodamine B as the fluorescent dye at a concentration of 1 to 123 ppm. This fluorescent inspection liquid is excellent in safety to the human body and can prevent deterioration due to ultraviolet light during storage. Further, since this fluorescent inspection liquid is decomposed by sufficient light irradiation, cleaning work after use can be omitted, which is preferable.

Although the present disclosure has been described in detail, the present disclosure is not limited to the above-described individual embodiments. Various additions, replacements, modifications, partial deletions, and the like can be made to these embodiments without departing from the essence and gist of the present disclosure, or without departing from the essence and gist of the present disclosure derived from the claims and equivalents thereof. Further, these embodiments can also be implemented in combination. For example, in the above-described embodiments, the order of operations and the order of processes are shown as examples, and are not limited to these. Furthermore, the same applies to a case where numerical values or mathematical expressions are used in the description of the above-described embodiments.

## Claims

1. A fluorescent inspection liquid containing:
water;
a fluorescent dye dissolved in the water; and
a deterioration inhibitor configured to prevent deterioration of the fluorescent dye due to light,
wherein the deterioration inhibitor is a parahydroxybenzoate ester.

2. The fluorescent inspection liquid according to claim 1, wherein
the fluorescent inspection liquid contains methyl parahydroxybenzoate as the deterioration inhibitor at a concentration equal to or higher than 50 ppm.

3. The fluorescent inspection liquid according to claim 2, wherein
the fluorescent inspection liquid contains the methyl parahydroxybenzoate at a concentration equal to or lower than 100 ppm.

4. The fluorescent inspection liquid according to any one of claims 1 to 3, wherein
the fluorescent inspection liquid contains riboflavin as the fluorescent dye at a concentration of 5 to 27 ppm.

5. The fluorescent inspection liquid according to any one of claims 1 to 3, wherein
the fluorescent inspection liquid contains rhodamine B as the fluorescent dye at a concentration of 1 to 123 ppm.
